## Europäisches Patentamt
## European Patent Office
## Office européen des brevets

(11) Veröffentlichungsnummer: **0 261 740**
**A2**

(12) **EUROPÄISCHE PATENTANMELDUNG**

(21) Anmeldenummer: **87201822.1**

(22) Anmeldetag: **22.09.87**

(51) Int. Cl.⁴: **H04L 5/16**

(30) Priorität: **26.09.86 DE 3632710**

(43) Veröffentlichungstag der Anmeldung:
**30.03.88 Patentblatt 88/13**

(84) Benannte Vertragsstaaten:
**CH DE ES FR GB IT LI SE**

(71) Anmelder: **Philips Patentverwaltung GmbH**
**Wendenstrasse 35 Postfach 10 51 49**
**D-2000 Hamburg 1(DE)**

㊼ **DE**

(71) Anmelder: **N.V. Philips' Gloeilampenfabrieken**
**Groenewoudseweg 1**
**NL-5621 BA Eindhoven(NL)**

㊼ **CH ES FR GB IT LI SE**

(72) Erfinder: **Sulzbacher, Norbert, Dipl.-Ing.**
**Sollenberger Strasse 19**
**D-8551 Weissenohe(DE)**
Erfinder: **Heinlein, Hans-Jürgen, Dipl.-Ing.**
**Wieseneckstrasse 10a**
**D-8501 Schwaig 1(DE)**

(74) Vertreter: **Dreykorn-Lindner, Werner, Dipl.-Ing.**
**et al**
**Philips Patentverwaltung GmbH**
**Wendenstrasse 35 Postfach 10 51 49**
**D-2000 Hamburg 1(DE)**

(54) **Zweidraht-Zeitgetrenntlageverfahren und Schaltungsanordnung zur Vollduplexübertragung zwischen einer Hauptstation und einer Nebenstation.**

㊸ Beim Zweidraht-Zeitgetrenntlageverfahren erfolgt die Richtungstrennung dadurch, daß auf beiden Seiten des Übertragungsweges nicht gleichzeitig, sondern abwechselnd gesendet und empfangen wird. Sowohl bei bit-als auch bei burstweiser Übertragung ist die erzielbare Reichweite abhängig von der Signallaufzeit auf der Leitung.

Zur Vergrößerung der maximal zulässigen Leitungslänge bei Verwendung des Zweidraht-Zeitgetrenntlageverfahrens, erfolgt eine Kompensation der Signallaufzeit in der Nebenstation dadurch, daß nicht erst in der zweiten Hälfte der Periodendauer des Sendetakts eine Signalübertragung von der Nebenstation zur Hauptstation, sondern bereits vorzeitig in der ersten Hälfte der Bittaktperiode durchgeführt wird. Der Beginn der Signalübertragung kann beispielsweise in Abhängigkeit von der gemessenen Leitungslänge oder in Abhängigkeit von vorgebbaren, für die Signalübertragung in beiden Richtungen unterschiedlichen Zeitintervallen festgelegt werden.

EP 0 261 740 A2

FIG.1

### Zweidraht-Zeitgetrenntlageverfahren und Schaltungsanordnung zur Vollduplexübertragung zwischen einer Hauptstation und einer Nebenstation

Die Erfindung betrifft ein Zweidraht-Zeitgetrenntlageverfahren zur Vollduplexübertragung zwischen einer Hauptstation und einer Nebenstation gemäß dem Oberbegriff des Patentanspruchs 1.

In "Digitale Vermittlungstechnik" von H Besier et al, R. Oldenbourg Verlag München - Wien, 1981, Seiten 180 bis 182 ist das Zweidraht-Zeitgetrenntlageverfahren zur Vollduplexübertragung von Bitfolgen (Bursts) zwischen einer Hauptstation und einer Nebenstation beschrieben und erläutert.

Die Zeitmultiplex-Übertragung erfolgt durch die Bildung von Zeitrahmen, wobei die Struktur des Zeitrahmens durch das zur Richtungstrennung verwendete Zeitgetrenntlageverfahren beeinflußt wird. Zur Verringerung der benötigten Schrittgeschwindigkeit ist innerhalb eines Zeitgetrenntlageblocks die Blockläge (in Anzahl von Bits) möglichst groß zu wählen. Üblicherweise werden in einem Zeitrahmen zwei PCM-Worte zusammengefaßt. Da dieser Zeitrahmen gleichzeitig einen Zeitgetrenntlageburst darstellt, ist keine Rahmensynchronisierinformation notwendig. Die Richtungstrennung erfolgt dadurch, daß auf beiden Seiten des Übertragungswegs nicht gleichzeitig, sondern abwechselnd gesendet und empfangen wird.

Von der Hauptstation (Vermittlungsstelle) wird periodisch ein Informationsburst ausgesendet. Dieser Block, welcher die Information eines Multiplexrahmens enthält, wird nach der Signallaufzeit von der Nebenstation (Endstelle) empfangen. Nach einem Schutzintervall, welches entweder fest eingestellt oder an die Laufzeit angepasst ist, beginnt die Nebenstation mit dem Aussenden eines Informationsbursts der gleichen Dauer. Dieser Block wird wiederum nach der Laufzeit von der Hauptstation empfangen. Danach vergeht eine bestimmte Wartezeit, bis die Hauptstation wieder mit der Aussendung des nächsten Informationsbursts beginnt. Die feste Zyklusdauer ergibt sich also aus der Summe der zweifachen Dauer des Informationsbursts, der zweifachen Laufzeit, dem Schutzintervall und der Wartezeit, wobei entsprechend der Struktur des Multiplexrahmens für die Zykluszeit sich ein Wert von 125 µs ergibt, welcher einer Rahmenwiederholfrequenz von 8 kHz entspricht.

Auf Seite 182 ist angegeben, daß die maximal zulässige Leitungslänge bei einer Nutzbitrate von 80 kbit/s und einer Übertragungsbitrate 256 kbit/s ca. 4 Kilometer betägt. Zur Reichweitenvergrößerung ist ausgeführt, daß im Multiplexrahmen mindestens 2 Bursts zusammmengefaßt und gemeinsam übertragen werden können, um dadurch Laufzeiten einzusparen, wodurch ein erhöhter Aufwand an Zwischenspeichern notwendig ist. Die Zyklusdauer beträgt in diesem Fall 250 µs, was einer Rahmenwiederholfrequenz von 4 kHz entspricht.

Weiterhin ist aus der DE-OS 31 45 126 eine Datenübertragungsanlage für Vollduplexübertragung bekannt, bei der anstelle eines Bursts die Übertragung bitweise erfolgt. Auch bei der bitweisen Übertragung ist die erzielbare Reichweite abhängig von der Signallaufzeit auf der Leitung. Bei dem daraus bekannten Zweidraht-Zeitgetrenntlageverfahren wird in der Hauptstation ein Sendetakt und in der Nebenstation ein mit dem Sendetakt synchronisierbarer Nebenstationstakt erzeugt. In der ersten Hälfte der Peri odendauer des Sendetakts erfolgt eine Signalübertragung von der Hauptstation zur Nebenstation und iin der zweiten Hälfte erfolgt eine Signalübertragung von der Nebenstation zur Hauptstation. Die Abtastung der Signale erfolgt in der Nebenstation nach einem Viertel der Periodendauer des Sendetakts, also zum Zeitpunkt der größten Öffnung des Auges. Dabei wird der Takt in der Nebenstation durch eine Phasennachführschaltung (PLL) dem empfangenen Datenstrom nachgeführt, woraus eine Phasenverschiebung zwischen Sendetakt und Nebenstationstakt resultiert, welche der Signallaufzeit auf der Leitung entspricht. Die Abtastung der Daten in der Hauptstation erfolgt kurz vor Ende der jeweiligen Bitperiode des Sendetakts. Die Funktion des aus der DE-OS 31 45 126 bekannten Zweidraht-Zeitgetrenntlageverfahrens ist gewährleistet, wenn das von der Nebenstation zur Hauptstation gesendete Signal noch vor Ende der entsprechenden Bitperiode in der Hauptstation angekommen ist.

Der Grenzwert für die erzielbare Reichweite ist dann erreicht, wenn die Signallaufzeit auf der Leitung ein Viertel der Bitperiode beträgt.

Der Erfindung liegt die Aufgabe zugrunde, das aus der DE-OS 31 45 126 bekannte Zweidraht-Zeitgetrenntlageverfahren derart auszugestalten, daß auf einfache Art und Weise eine Vergrößerung der maximal zulässigen Leitungslänge erreicht wird. Die Schaltungsanordnung zur Durchführung des Verfahrens soll nur einen geringen zusätzlichen Schaltungsaufwand erfordern.

Diese Aufgabe wird erfindungsgemäß durch ein Verfahren mit den Merkmalen des Patentanspruchs 1 gelöst.

Das erfindungsgemäße Verfahren weist die Vorteile auf, daß es weitgehend unabhängig vom gewählten Leitungscode ist und daß keine Änderung bei Einrichtungen in der Hauptstation zur Durchführung des aus der DE-OS 31 45 126 bekannten Verfahrens erforderlich ist. Lediglich in der Nebenenstation ist ein zusätzlicher Schaltungsaufwand für die vorzeitige Signalübertragung von der Nebenstation zur Hauptstation erforderlich. Das erfindungsgemäße Verfahren kann auch bei der Übertragung von Signalbursts eingesetzt werden. Die theoretisch erzielbare Vergrößerung der Reichweite beträgt beim erfindungsgemäßen Verfahren 50 %.

Beim Zweidraht-Zeitgetrenntlageverfahren gemäß Patentanspruch 2 wird eine Ausmessung der Leitungslänge bzw. der Signallaufzeit vorgenommen. Die Vergrößerung der Reichweite ergibt sich dadurch, daß von der Nebenstation zur Hauptstation das Signal nicht erst in der zweiten Hälfte der Periodendauer des Sendetakts gesendet wird, sondern unmittelbar nach der Abtastung des Signals in der Nebenstation. Da bei kurzer Übertragungszeit die Signallaufzeiten entsprechend kurz sind, ist es von Vorteil, wenn die Laufzeitkompensation abschaltbar ist. Da in der Regel die Leitungslänge und damit die Signallaufzeit bekannt ist, erfordert die Abschaltung der Laufzeitkompensation keinen zusätzlichen Aufwand.

Bei dem Zweidraht-Zeitgetrenntlageverfahren gemäß Patentanspruch 3 sind unterschiedliche Zeitintervalle für die Signalübertragung von der Hauptstation zur Nebenstation, bzw. von der Nebenstation zur Hauptstation vorgesehen. Durch die Wahl von unterschiedlichen Längen der Zeitintervalle für Senden und Empfangen in der Nebenstation, ist ein Ausmessen der Leitungslänge bzw. der Signallaufzeit nicht erforderlich.

Eine vorteilhafte Ausgestaltung des Zweidraht-Zeitgetrenntlageverfahrens ist im Patentanspruch 4 angegeben. Als zusätzlicher Schaltungsaufwand ist in der Nebenstation nur eine Verzögerungsstufe erforderlich.

Die Erfindung wird im folgenden anhand einer in der Zeichnung dargestellten Ausführungsform näher beschrieben und erläutert. Es zeigt:

Fig. 1 das Blockschaltbild einer Ausführungsform zur Durchführung des erfindungsgemäßen Verfahrens,

Fig. 2a und Fig. 2b den zeitlichen Verlauf beim bekannten Zweidraht-Zeitgetrenntlageverfahren bei kurzer und langer Leitungslänge,

Fig 3 den zeitlichen Verlauf beim erfindungsgemäßen Zweidraht-Zeitgetrenntlageverfahren und vorzeitigem Aufschalten der Sendedaten in der Nebenstation und

Fig. 4a und Fig. 4b den zeitlichen Verlauf beim erfindungsgemäßen Zweidraht-Zeitgetrenntlageverfahren und ungleicher Zeitintervalle für Senden und Empfangen.

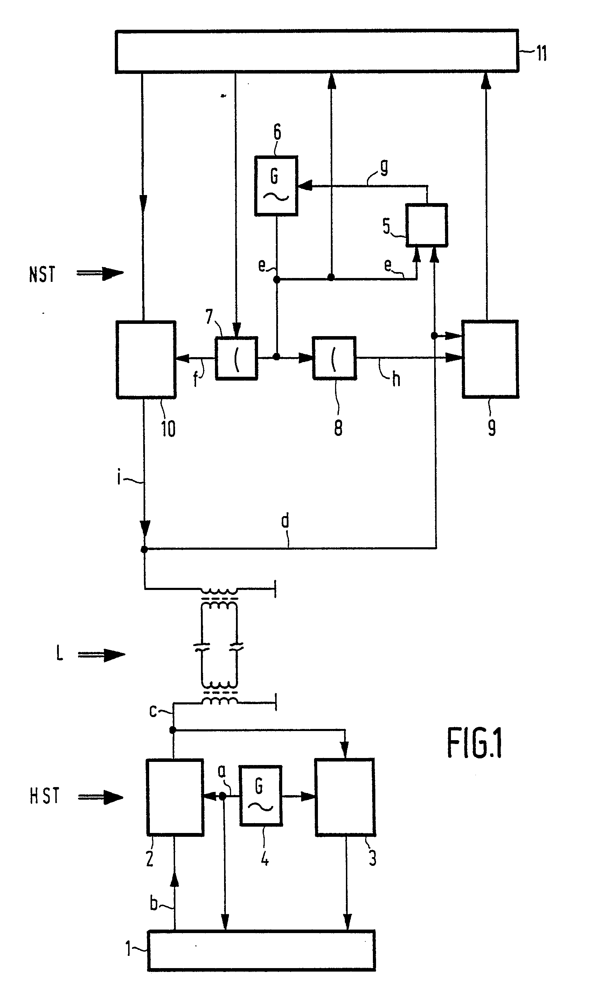

In Fig. 1 ist das Blockschaltbild einer Ausführungsform zur Durchführung des erfindungsgemäßen Verfahrens dargestellt. Ein Endgerät 1 ist mit einer Hauptstation HST und ein Endgerät 11 ist mit einer Nebenstation NST verbunden. Bei den Endgeräten handelt es sich beispielsweise um Teletex-Geräte. Die Hauptstation HST ist mit der Nebenstation NST über eine Zweidrahtleitung L verbunden.

In der Hauptstation HST ist ein Takterzeuger 4 angeordnet, welcher einerseits mit einem Codierer 2 zur Zuführung des Sendetakts a und andererseits mit einem Decodierer 3 verbunden ist. Der Codierer 2 übernimmt von dem Endgerät 1 die Sendedaten b und leitet diese als codier tes Sendesignal c zum mit der Zweidrahtleitung L verbundenen Übertrager. Der Übertrager ist weiterhin mit dem Decodierer 3 verbunden, welcher das von der Nebenstation NST empfangenen Sendesignal i verarbeitet und an das Endgerät 1 weiterleitet.

In der Nebenstation NST ist ein selbständiger, umschaltbarer Takterzeuger 6 angeordnet, welcher nach dem in der DE-OS 31 45 126 beschriebenen Zweidraht-Zeitgetrenntlageverfahren von einer PLL-Schaltung 5 angesteuert wird. Der Nebenstationstakt e und das Empfangssignal d werden den beiden Eingängen der PLL-Schaltung 5 zugeführt, welche das Phasenstellsignal g für den Takterzeuger 6 erzeugt.

In der Nebenstation NST sind ein Codierer 10 und ein Decodierer 9 angeordnet. Der Codierer 10 setzt die vom Endgerät 11 übernommenen Sendedaten in gleicher Weise wie der Codierer 2 in das Sendesignal i um und übergibt dieses an den an die Zweidrahtleitung L angeschlossenen Übertrager.

Der Nebenstationstakt e wird einerseits einer ersten Verzögerungsstufe 7 und andererseits einer zweiten Verzögerungsstufe 8 zugeführt. Mittels der zweiten Verzögerungsstufe 8 wird ein Abtasttakt h für den Decodierer 9 erzeugt, wobei das Zeitintervall derart gewählt wird, daß die Abtastung der Signale in der Nebenstation NST zum Zeitpunkt der größten Öffnung des Auges erfolgt und eine Unterdrückung von Echosignalen vorgenommen wird. Vorzugsweise erfolgt die Abtastung des Empfangssignals d nach einem Viertel der Periodendauer des Nebenstationstakts e.

Der Nebenstationstakt e wird durch die PLL-Schaltung 5 dem Sendetakt a der Hauptstation HST nachgeführt, woraus sich eine Phasenverschiebung des Sendetakts a und des Nebenstationstakts e ergibt, welche der Signallaufzeit auf der Zweidrahtleitung L entspricht. Die Abtastung der empfangenen Daten in der Hauptstation HST erfolgt kurz vor Ende der Periodendauer des Sendetakts a.

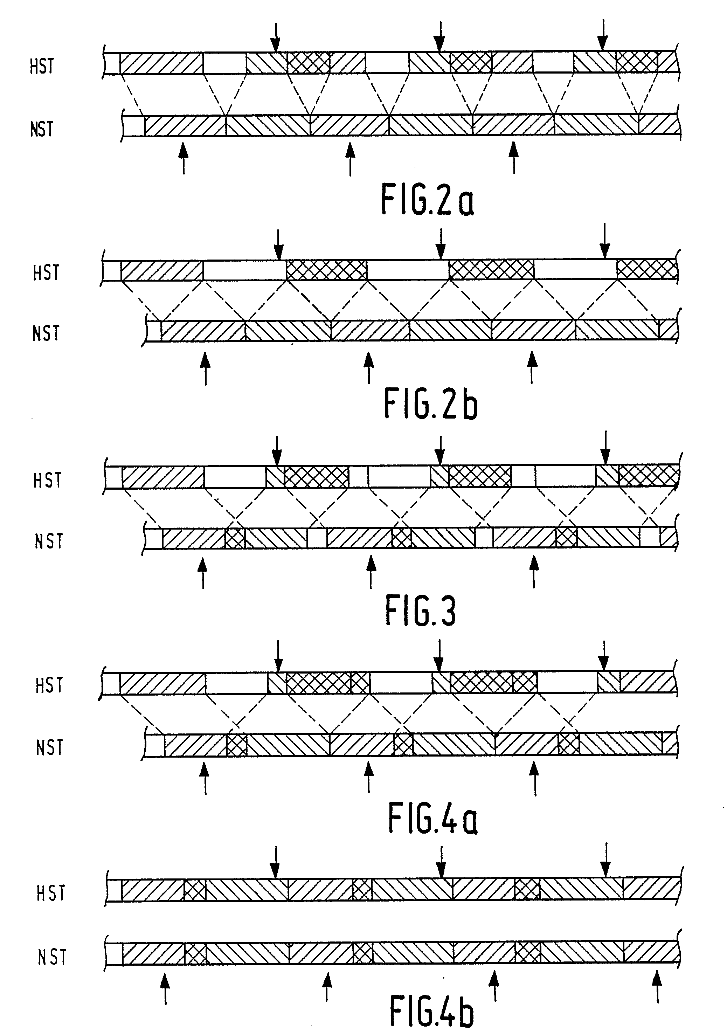

In den Fig. 2a und 2b ist der zeitliche Verlauf des aus der DE-OS 31 45 126 bekannten Zweidraht-Zeitgetrenntlageverfahrens, d.h. ohne der erfindungsgemäßen Laufzeitkompensation dargestellt. In der ersten Zeile ist der Zeitrahmen in der Hauptstation HST und in der zweiten Zeile der Zeitrahmen in der Nebenstation NST dargestellt. Durch die Pfeile ist jeweils der Abtastzeitpunkt in der Hauptstation HST und in der Nebenstation NST angegeben. Die Breite des Zeitintervalls in der Hauptstation HST zwischen Sende-und Empfangsphase ergibt sich in Abhängigkeit von der Leitungslänge und entspricht dem zweifachen Wert der Signallaufzeit. Wie aus Fig. 2a und 2b ersichtlich tritt in der Hauptstation HST eine zeitliche Überlappung von Sende-und Empfangsphase auf (kreuzschraffiertes Feld).

Bei zu großer Leitungslänge, insbesondere wenn die Signallaufzeit auf der Zweidrahtleitung L das Zeitintervall von einen Viertel der Periodendauer des Sendetakts a überschreitet, steht in der Hauptstation HST das Sendesignal i von der Nebenstation NST noch nicht zur Verfügung und führt deshalb zu Fehlern. Dies ist auf die Aufteilung der Übertragungszeit für ein Bit in jede Übertragungsrichtung zurückzuführen (vgl. DE-OS 31 45 126).

In Fig. 3 ist der zeitliche Verlauf des erfindungsgemäßen Zweidraht-Zeitgetrenntlageverfahrens für den Fall des vorzeitigen Aufschaltens der Sendedaten in der Nebenstation NST dargestellt. Das Zeitintervall der Verzögerung in der ersten Verzögerungsstufe 7 kann in Abhängigkeit von der gemessenen Leitungslänge (z.B. mittels Schalteroder Steuerbefehl über die Endgeräte 1 und 11) eingestellt werden. Zum Abtastzeitpunkt treten durch die erfindungsgemäße Laufzeitkompensation sowohl in der Hauptstation HST als auch in der Nebenstation NST keine Überlappungen der Sende-und Empfangsphase zum Abtastzeitpunkt auf. Der Zeitpunkt des vorzeitigen Aufschaltens der Sendedaten wird bei dieser Ausführungsform durch Ausmessen der Leitungslänge bzw. Signallaufzeit bestimmt.

In den Fig. 4a und 4b ist der zeitliche Verlauf des erfindungsgemäßen Zweidraht-Zeitgetrenntlageverfahrens bei Verwendung ungleicher Zeitschlitze für Senden und Empfangen dargestellt. Für den Fall der in Fig. 4a dargestellten langen Zweidrahtleitung L bzw. den in Fig. 4b dargestellten Fall der kurzen Zweidrahtleitung L treten sowohl in der Hauptstation HST als auch in der Nebenstation NST zum Abtastzeitpunkt keine zeitlichen Überlappungen der Sende-und Empfangssignale zum Abtastzeitpunkt auf.

## Ansprüche

1. Zweidraht-Zeitgetrenntlageverfahren zur Vollduplexübertragung zwischen einer Hauptstation (HST) und einer Nebenstation (NST), bei dem in der Hauptstation (HST) ein Sendetakt (a) und in der Nebenstation (NST) ein mit dem Sendetakt (a) synchronisierbarer Nebenstationstakt (e) erzeugt wird und bei dem in der ersten Hälfte der Periodendauer des Sendetakts (a) eine Signalübertragung von der Hauptstation (HST) zur Nebenstation (NST) und in der zweiten Hälfte der Periodendauer des Nebenstationstaktes (e) eine Signalübertragung von der Nebenstation (NST) zur Hauptstation (HST) erfolgt, dadurch gekennzeichnet, daß die Nebenstation (NST) nach Abtastung des Empfangssignals (d) bereits in der ersten Hälfte der Bittaktperiode des Nebenstationstaktes (e) mit der Signalübertragung beginnt.

2. Zweidraht-Zeitgetrenntlageverfahren nach Anspruch 1, dadurch gekennzeichnet, daß der Beginn der Signalübertragung von der Nebenstation (NST) zur Hauptstation (HST) in Abhängigkeit von der gemessenen Leitungslänge festgelegt wird.

3. Zweidraht-Zeitgetrenntlageverfahren nach Anspruch 1, dadurch gekennzeichnet, daß während der Bittaktperiode des Nebenstationstaktes (e) unterschiedliche Zeitintervalle für die Signalübertragung von der Hauptstation (HST) zur Nebenstation (NST) bzw. von der Nebenstation (NST) zur Hauptstation (HST) vorgesehen sind.

4. Schaltungsanordnung zur Durchführung des Zweidraht-Zeitgetrenntlageverfahrens nach Anspruch 1, dadurch gekennzeichnet, daß in der Nebenstation (NST) eine, mit einem Takterzeuger (6) und einem Codierer (10) verbundene, erste Verzögerungsstufe (7) angeordnet ist, welche den vom Takterzeuger (6) zugeführten Nebenstationstakt (e) um maximal der Hälfte der Bittaktperiode verzögert, daß in der Nebenstation (NST) eine mit dem Takterzeuger (6) und einem Decodierer (9) verbundene, zweite Verzögerungsstufe (8) angeordnet ist, welche den zugeführten Nebenstationstakt (e) verzögert und daß die von der ersten Verzögerungsstufe (7) erzeugte Verzögerung so einstellbar ist, daß diese größer ist als die von der zweiten Verzögerungsstufe (8) erzeugte Verzögerung.

FIG.1

NST

HST

L

0 261 740

FIG.2a

FIG.2b

FIG.3

FIG.4a

FIG.4b

2-Ⅱ-PHD 86-329